# EUROPÄISCHE PATENTSCHRIFT

(11) **EP 2 134 528 B1**
(45) Veröffentlichungstag und Bekanntmachung des Hinweises auf die Patenterteilung: **08.06.2011**
(21) Anmeldenummer: 08748885.4
(22) Anmeldetag: 11.04.2008
(51) Int. Cl.: B29C 45/26, B29C 45/40, B29C 33/44, B29C 33/30

(54) **MODULAR AUFGEBAUTES FORMWERKZEUG MIT RAHMEN**
MOULDING TOOL WITH A MODULAR CONSTRUCTION COMPRISING A FRAME
MOULE AVEC CADRE, À STRUCTURE MODULAIRE

(30) Priorität: 11.04.2007 DE 102007017972
(43) Veröffentlichungstag der Anmeldung: 23.12.2009
(73) Patentinhaber: Schneider Form GmbH, 73265 Dettingen-Teck (DE)
(72) Erfinder: RUOPP, Gerhard, 89143 Blaubeuren (DE); KLEIN, Heinz, 73265 Dettingen (DE)
(74) Vertreter: Wegener, Markus
(86) Internationale Anmeldenummer: PCT/EP2008/002877
(87) Internationale Veröffentlichungsnummer: WO 2008/125290

(56) Entgegenhaltungen:
- EP-A- 1 588 823
- JP-A- 59 185 560
- US-A1- 2001 040 314

## Beschreibung

Die vorliegende Erfindung betrifft eine modular aufgebaute Vorrichtung zum Herstellen von Spritzguss-, Druckguss- oder Pressformteilen, insbesondere von großflächigen Kunststoffformteilen. Solche Vorrichtungen dienen insbesondere im Automobilbau zur Herstellung von Karosserieteilen, wie z.B. Stoßfängern, Spoilern, Armaturenbrettern oder Ähnlichem.

In jüngster Zeit wird verstärkt der Gedanke verfolgt, das Formwerkzeug modular aufzubauen. Dabei wird ein gleich bleibendes Rahmenteil vorgesehen, in das ein veränderliches Kernteil einsteckbar ist. Das Kernteil kann dabei mit einer sogenannten Auswerferplatte verbunden sein. Eine derartige modulare Vorrichtung ist beispielsweise in der EP 1 588 823 A1 beschrieben.

Zu diesem Zweck besitzt die Vorrichtung dort ein Kernteil mit einer Form gebenden Kernseite und ein Mantelteil mit einer Form gebenden Mantelseite, die zwischen einer maschinenseitigen Aufspannfläche und einer Druck ausübenden Anordnung gegeneinander verspannbar sind und dabei zwischen sich einen Hohlraum begrenzen, der dem zu erzeugenden Formteil entspricht und in den - im Falle der Ausbildung als Spritzgießwerkzeug - wenigstens eine Hochdruckzuführung für das Spritzgussmaterial mündet. Das Kernteil und das Mantelteil werden auch als Patrize bzw. Matrize bezeichnet. Das herkömmliche Kernteil ist an seiner Unterseite über Betätigungsstangen und/oder über Führungsorgane mit einer dem speziellen Formteil und somit dem speziellen Kernteil zugeordneten Auswerferplatte verbunden, die zwischen einer Betriebsstellung und einer Auswurfstellung relativ zu dem Kernteil verfahrbar ist. Durch ein Verfahren der an eine Adapterplatte gekoppelten Auswerferplatte in die Auswurfstellung werden gleitverschieblich gelagerte Auswerfereinsätze, die in der Betriebsstellung noch formschlüssig in die Form gebende Kernseite des Kernteils eingesetzt sind, ausgefahren und führen dadurch eine Auswurfbewegung zum Entformen eines so hergestellten Formteils aus.

Der in der EP 1 588 823 A1 offenbarte Rahmen weist eine im Wesentlichen rechteckige zentrale Durchlassöffnung auf. Der Rahmen wird mittels mehrerer Distanzleisten beabstandet an einer Aufspannplatte montiert. Die Distanzleisten dienen zum Vergrößern eines Raums zwischen dem in den Rahmen einzuführenden Kernteil und der Aufspannplatte. In diesem Raum wird die Adapterplatte angeordnet. Im montierten Zustand des Kernteils ist die Adapterplatte fest mit der Auswerferplatte verbunden. Ferner ist die Adapterplatte mit Hubeinrichtungen verbunden, die um den äußeren Umfang des Rahmens herum angeordnet sind, um die oben erwähnte Auswurfbewegung durchzuführen.

Eine solche herkömmliche Form ermöglicht zwar einen relativ einfachen Austausch des Kernteils, baut aber recht groß. Die großzügige Bauweise bedingt hohe Materialkosten, da viel Material benötigt wird.

Ein weiterer Nachteil des herkömmlichen modularen Formwerkzeugs ist darin zu sehen, dass relativ viel Zeit zum Verbinden der Adapterplatte mit der Auswerferplatte erforderlich ist.

Ferner ist durch diese Art des Aufbaus des Rahmen nicht besonders verwindungssteif, was aber bei den sehr hohen, insbesondere beim Spritzguss auftretenden, Drücken äußerst wünschenswert wäre.

Die europäische Patentanmeldung EP 1 588 823 A offenbart eine modular aufgebaute Vorrichtung zum Herstellen eines Formteils mit: einem Kernteil, einem Rahmenteil und einem Mantelteil, die vorzugsweise zwischen zwei Aufspannplatten verspannbar sind, wobei in einer Betriebsstellung einer Formmaschine das Kernteil und das Mantellteil zwischen sich einen Hohlraum für das herzustellende Formteil definieren und das Kernteil und das Formteil miteinander verbunden sind, wobei das Kernteil eine Auswerferplatte umfasst, die beweglich mit dem Kernteil verbunden ist und die gemeinsam eine Austauscheinheit bilden, die derart ausgebildet ist, dass die Auswerferplatte in der Betriebsstellung in eine Ausnehmung eingreift und mittels zumindest einer im Wesentlichen unmittelbar verbundenen Hubeinrichtung in eine Auswurfstellung bewegbar ist.

Die amerikanische Patentanmeldung US 2001/0040314 A1 offenbart ein Spritzgussbasissystem.

Es ist daher eine Aufgabe der vorliegenden Erfindung, eine verbesserte, modular aufgebaute Vorrichtung zum Herstellen eines Formteils bereitzustellen, mit der die im Stand der Technik vorhandenen Nachteile überwunden werden können.

Diese Aufgabe wird mit einer modular aufgebauten Vorrichtung zum Herstellen eines Formteils gelöst, wobei die modular aufgebaute Vorrichtung Folgendes aufweist: ein Kernteil, ein Rahmenteil und ein Mantelteil, die vorzugsweise zwischen zwei Aufspannplatten verspannbar sind, wobei in einer Betriebsstellung einer Formmaschine das Kernteil und das Mantelteil zwischen sich einen Hohlraum für das herzustellende Formteil definieren und das Kernteil und das Rahmenteil miteinander verbunden sind, wobei das Rahmenteil mit einem Boden verbundene Schenkel umfasst, die zusammen eine Ausnehmung in dem Rahmenteil umschließen, wobei das Kernteil eine Auswerferplatte umfasst, die beweglich mit dem Kernteil verbunden ist und die gemeinsam eine Austauscheinheit bilden, die derart ausgebildet ist, dass die Auswerferplatte in der Betriebsstellung in die Ausnehmung eingreift und mittels zumindest einer im Wesentlichen unmittelbar mit der Auswerferplatte verbundenen Hubeinrichtung in eine Auswurfstellung bewegbar ist, wobei die Hubeinrichtung in die Austauscheinheit, insbesondere in das Kernteil integriest ist.

Eine so aufgebaute Form baut sehr klein. Die herkömmlicherweise benötigten Distanzleisten können weggelassen werden. Gleiches gilt für die im Stand der Technik zwingend erforderliche Adapterplatte. Beim Einbau einer Austauscheinheit (Kernteil mit daran befestigter, beweglicher Auswerferplatte) muss diese lediglich in das Rahmenteil eingehoben werden. Das Einheben ist einfach und unkompliziert, da die Auswerferplatte lediglich in die Ausnehmung des Rahmenteils eingeführt werden muss. Vorzugsweise schlägt die Auswerferplatte am Ende dieses Einbauvorgangs an den Boden an. Eine präzise Führung der mitunter schweren Austauscheinheit während des Einbaus ist nahezu nicht erforderlich. Auch das aufwändige Verbinden der Auswerferplatte mit einer Adapterplatte, wie im Stand der Technik üblich, entfällt. Da u.A. die Adapterplatte als solche entfällt, ist die Vorrichtung gemäß der Erfindung auch leichter. Daraus ergeben sich geringere Materialkosten.

"Im Wesentlichen unmittelbar verbunden" bedeutet, dass die Auswerferplatte ohne Zwischenschaltung weiterer Platten betätigt wird. Dies schließt natürlich eine Anordnung von Kopplungs- und Sicherungsgliedern (Unterlegscheiben, Gummiringe, o. Ä.) zwischen der Auswerferplatte und der Hubeinrichtung nicht aus.

Soll ein anderes Formteil hergestellt werden, so wird lediglich die alte Austauscheinheit gegen eine neue Austauscheinheit mit einer neuen gewünschten Kontur sowie ein neues Mantelteil ausgetauscht. Dieser Wechsel kann innerhalb von einer Stunde durchgeführt werden. Das Rahmenteil bleibt dabei immer das Gleiche.

Da das Rahmenteil einen im Wesentlichen durchgehenden Boden aufweist, der von einem aus dem Boden hervorstehenden Rand umgeben wird, der wiederum aus Schenkeln besteht, ist das Rahmenteil gemäß der vorliegenden Erfindung äußerst verwindungssteif. Die Schenkel umschließen den Boden vorzugsweise vollständig. Natürlich können die Schenkel aber auch Bohrungen und Aussparungen zur Durchführung von Zuführleitungen aufweisen. Das Rahmenteil liegt vorzugsweise vollflächig an einer maschinenbeweglichen Aufspannplatte an. Die im Stand der Technik übliche punktuelle Stützung des Rahmenteils durch Distanzleisten entfällt. Da bei den bei der Herstellung auftretenden hohen Drücken, insbesondere beim Spritzgießen, sehr stabile Formen gewünscht sind, zeichnet sich das erfindungsgemäße Rahmenteil mit dem im Wesentlichen durchgehenden Boden durch seine besondere Steifigkeit aus.

Ein Wechsel eines Kernteils und eines Mantelteils kann in einem Zustand erfolgen, bei dem das Werkzeug an der Formmaschine mittels der Aufspannplatten montiert ist. Ein vollständiger Ausbau des Werkzeug aus der Formmaschine zum Zwecke der Konturbestückung ist im Vergleich zum Stand der Technik nicht erforderlich. Kern- und Mantelteil können einzeln ausgetauscht werden, während die restlichen Teile des Werkzeugs vorzugsweise mit der Formmaschine verbunden bleiben.

Erfindungsgemäβ ist die Hubeinrichtung in die Austauscheinheit, insbesondere in das Kernteil, integriert.

Das Kernteil wird üblicherweise aus Vollmaterial durch zerspanende Bearbeitung hergestellt. In das Vollmaterial können auch Bohrungen gesetzt werden, die zur Aufnahme der Hubeinrichtungen dienen. Die auch für das Kernteil gewünschte Steifigkeit wird dadurch nicht verschlechtert. Da die Hubeinrichtungen in das Kernteil integriert sind und mit der Auswerferplatte im Wesentlichen unmittelbar verbunden sind, entfällt das aufwändige Verbinden der Auswerferplatte mit der hier eingesparten Adapterplatte, was die für einen Austausch erforderliche Zeit zusätzlich reduziert.

Wenn die Energiezuführungen immer an derselben Stelle des Austauschteils vorgesehen sind, lässt sich die für einen Austausch erforderliche Zeit weiter verringern und automatisieren.

Ferner ist es bevorzugt, wenn die Auswerferplatte in der Betriebsstellung an dem Boden des Rahmenteils anliegt.

Der Boden dient so während eines Formvorgangs als Widerlager. Das Austauschteil ist dann besonders in sich stabil. Während eines Formvorgangs herrschende Kräfte wirken nicht auf die Hubeinrichtung(en).

Weiter ist es von Vorteil, wenn die Schenkel den Boden vollständig umschließen, so dass die Auswerferplatte den Rahmen nicht durchgreift.

Wenn die Schenkel des Rahmens in umfänglicher Richtung geschlossen sind, erhöht dies die Verwindungssteifigkeit, wie bereits oben erwähnt.

Gemäß einer weiteren bevorzugten Ausgestaltung umschließen die Schenkel den Boden derart, dass die Ausnehmung, wenn das Rahmenteil mit dem Kernteil verbunden ist, im Wesentlichen nur in Richtung des Kernteils offen ist.

Auf diese Weise wird ein geschlossener Hohlraum definiert, wenn das Kernteil in das Rahmenteil eingesetzt ist, in dem sich die Auswerferplatte bewegen lässt. Die Auswerferplatte sowie die Hubeinrichtung sind gegenüber äußeren Einflüssen geschützt.

Ferner hat es sich als vorteilhaft gezeigt, wenn der Boden im Bereich der Ausnehmung mindestens ein Stützelement aufweist, das im Wesentlichen senkrecht aus dem Boden hervorsteht, wobei die Auswerferplatte entsprechende Öffnungen zur Aufnahme der Stützelemente aufweist.

Die Stützelemente können als Führungselemente für die Auswerferplatte während einer Auswurfbewegung dienen. Außerdem können zusätzlich oder alternativ herkömmliche Führungssäulen verwendet werden. Ferner kann die Höhe der Stützelemente derart gewählt werden, dass in einem Zustand, wenn das Rahmenteil mit der Austauschereinheit verbunden ist, das die das Kernteil (zusätzlich) stützen, insbesondere während eines Formvorgangs. Durch die Öffnungen in der Auswerferplatte reduziert sich das Gewicht der Auswerferplatte. Die Auswerferplatte lässt sich somit leichter bewegen.

Gemäß einer weiteren Ausführungsform weist das Kernteil auf seiner dem Rahmenteil zugewandten Seite ebenfalls eine Ausnehmung auf, die insbesondere im Wesentlichen deckungsgleich zur Ausnehmung des Rahmenteils ist.

Auf diese Weise lässt sich der zwischen dem Kernteil und dem Rahmenteil definierte Hohlraum weiter vergrößern. Somit können mit der Auswerferplatte größere Hübe gefahren werden. Dies ist insbesondere von Vorteil, wenn das Kernteil Schieber für Hinterschneidungen aufweist, bei denen große Hübe der Auswerferplatte zum Entformen erforderlich sind. Je größer der Hub der Auswerferplatte ist, desto weiter lassen sich die mit der Auswerferplatte verbundenen Schieber in eine Auswurfstellung ausfahren.

Weiterhin ist es bevorzugt, wenn zumindest einer der Schenkel und/oder das Stützelement einen Zentriereinheit aufweist. In diesem Fall weist das gegenüberliegende Element des Kernteils eine entsprechende Ausnehmung auf, um den Zentrierstift insbesondere formschlüssige aufzunehmen.

Auf diese Weise ist gewährleistet, dass insbesondere während eines Einbaus einer Austauscheinheit in das Rahmenteil die Austauscheinheit richtig relativ zum Rahmenteil orientiert ist. Vorzugsweise werden auch Zentrierkeile bzw. -leisten eingesetzt, die die Austauscheinheit während eines Einbaus in die richtige Lage relativ zum Rahmenteil bringen. Die Austauscheinheit justiert sich dann mitunter selbstständig beim Einheben derselben in das Rahmenteil. Diese Zentrierelement sind vorzugsweise an den Kontaktflächen zwischen dem Rahmenteil und dem Kernteil vorgesehen, wobei das Kernteil entsprechende Aussparungen zur Aufnahme der Zentrierelemente aufweist.

Gemäß einer weiteren vorteilhaften Ausgestaltung umfasst das Kernteil zumindest einen Schieber, der bei einer Bewegung der Auswerferplatte in Richtung des Kernteils in eine Auswurfstellung verfahrbar ist.

Der Schieber ist dazu vorzugsweise direkt mit der Auswurfplatte verbunden, kann jedoch aber auch über Führungsstangen mit der Auswerferplatte verbunden sein. Die Führungsstangen verlaufen in diesem Falle durch entsprechende Bohrungen im Kernteil hindurch.

Auch ist es bevorzugt, wenn die Hubeinrichtung ein hydraulisch, pneumatisch oder elektrisch betätigter Zylinder ist.

Die Auswahl des Zylinders hängt davon ab, welche Kräfte zum Auswerfen erforderlich sind. Wenn die Form insgesamt sehr klein baut und nur relativ geringe Kräfte erforderlich sind, könnte auch ein Elektromotor eingesetzt werden, um die Auswerferplatte aus einer Betriebsstellung in eine Auswurfstellung zu verfahren.

Außerdem hat es sich als vorteilhaft herausgestellt, wenn das Rahmenteil direkt, insbesondere flächig und/oder stoffschlüssig, mit einer maschinenbeweglichen Aufspannplatte verbunden ist.

Dies erhöht die Steifigkeit der Form.

Gemäß einer weiteren Ausführungsform ist das Mantelteil im Wesentlichen direkt mit einer Aufspannplatte verbunden.

Das Mantelteil kann so kleiner bauen. Aus Gründen der Zentrierung können dann zusätzliche Führungselemente vorgesehen werden, die außen an den (reduzierten) Mantel angebracht sind. Herkömmlicherweise sind Führungen in die Außenfläche eines (nicht reduzierten) Mantels eingelassen. Da das Mantelteil in der Regel aus Vollmaterial hergestellt wird, können erhebliche Kosten eingespart werden. Insbesondere bei Stahl hängt der Materialpreis stark von der Querschnittsfläche des Materials ab. Da gemäß der vorliegenden Erfindung keine "Wanne", zur Aufnahme des Mantels, zwischen dem Mantel und der Aufspannplatte erforderlich ist, kann diese Aufnahme ebenfalls eingespart werden.

In diesem Sinne handelt es sich bei der vorliegenden Form um eine Art Zweiplattenwerkzeug, das aus einer Matrize (Mantelteil) und einer Patrize (Rahmenteil plus Austauscheinheit) besteht.

Ferner ist es bevorzugt, wenn das Mantelteil mit einer vorzugsweise im Wesentlichen umlaufenden Verblockung versehen ist. Damit ist sichergestellt, dass das Mantelteil im Betriebszustand, insbesondere während eines Formvorgangs, unverrückbar in Relation zu dem Kernteil im Rahmen gelagert ist. Da das Mantelteil mitunter sehr klein baut, d.h. insbesondere geringe Materialstärken in Bereichen aufweist, die hohe Drücken ausgesetzt sind, kann so verhindert werden, dass es zu einer Bewegung von einzelnen Teilen des Mantelteils während des Formvorgangs kommt, was dann zu einem missgestalteten Formteil führen würde (Ausschussware).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Es zeigen:
- Fig. 1: eine perspektivische Ansicht eines Rahmenteils gemäß der vorliegenden Erfindung;
- Fig. 2: eine perspektivische Ansicht einer Austauscheinheit gemäß der vorliegenden Erfindung, die ein Kernteil und eine Auswerferplatte umfasst;
- Fig. 3: eine perspektivische Ansicht der Austauscheinheit der Fig. 2, die in das Rahmenteil der Fig. 1 eingehoben ist;
- Fig. 4: eine perspektivische Ansicht eines Mantelteils gemäß der vorliegenden Erfindung;
- Fig. 5: eine perspektivische Ansicht eines Formwerkzeugs gemäß der vorliegenden Erfindung in einem geschlossenen Zustand bzw. in einer Betriebsstellung;
- Fig. 6: eine Schnittansicht durch das geschlossene Formwerkzeug der Fig. 5 entlang einer Linie VI-VI der Fig. 5;
- Fig. 7: das Formwerkzeug gemäß der vorliegenden Erfindung in einer geöffneten Stellung, bei der das Mantelteil weggefahren und die Auswerferplatte in eine Auswurfstellung verfahren ist;
- Fig. 8: eine perspektivische Ansicht einer Unterseite der Austauscheinheit der Fig. 2; und
- Fig. 9: ein Formwerkzeug gemäß dem Stand der Technik mit Distanzleisten zwi- schen einem herkömmlichen Rahmenteil und einer maschinebeweglichen Aufspannplatte.

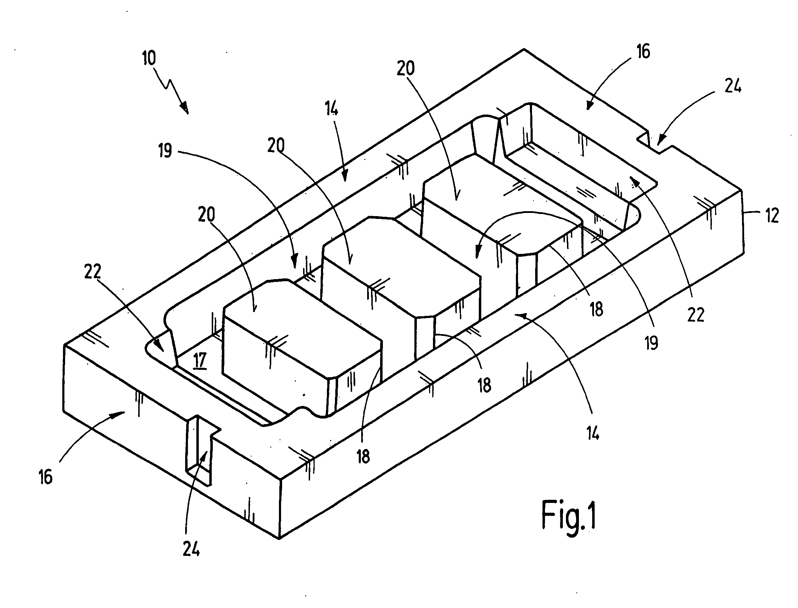

Fig. 1 zeigt eine perspektivische schematische Ansicht eines ersten Moduls 10, das ein Teil des Formwerkzeugs gemäß der vorliegenden Erfindung bildet.

In Fig. 1 ist ein Rahmenteil 10 mit einem Rahmen bzw. Körper 12 veranschaulicht. Der hier dargestellte Körper 12 hat vorzugsweise einen rechteckigen Querschnitt. Andere Querschnitte (z.B. Quadrat, Polygon, usw.) sind ebenfalls möglich. Der Rahmen 12 weist lange Schenkel 14, die sich gegenüberliegen, sowie kurze Schenkel 16 auf, die sich ebenfalls gegenüberliegen. Die Schenkel 14, 16 bilden einen Rand eines Bodens 17, der ebenfalls Teil des Körpers 12 ist. Der Boden 17 ist hier in Form einer im Wesentlichen geschlossenen Fläche realisiert Der Boden kann aber auch Öffnungen zur Durchführung von Zuleitungen oder Ähnlichem aufweisen. Aus dem Boden 17 stehen in der Fig. 1 Stützelemente 18, vorzugsweise mittig und senkrecht, hervor. Die Stützelemente 18 weisen Kopfflächen 20 auf, die als Anschlag für vorzugsweise deckungsgleiche Vorsprünge (nicht dargestellt) in einer Unterseite eines noch näher zu beschreibenden Kernteils dienen.

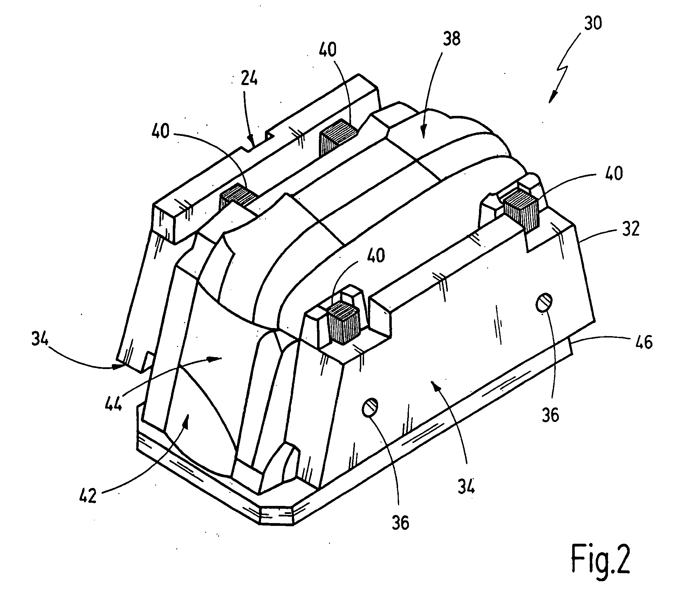

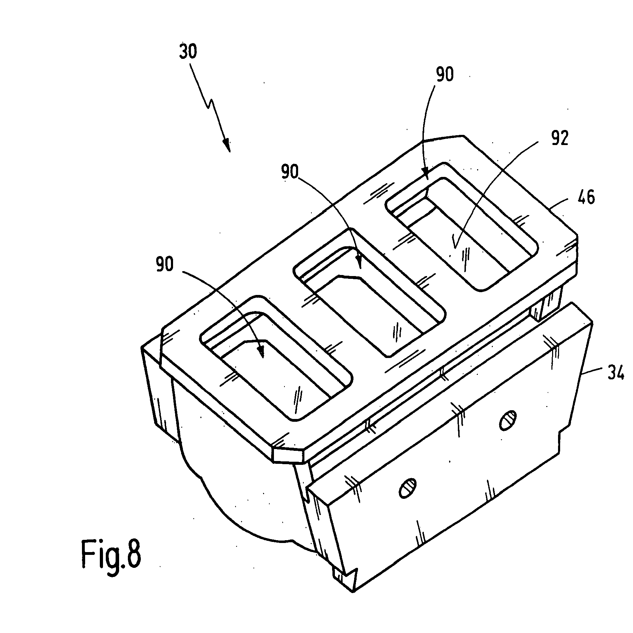

Es versteht sich, dass die Form der Grundfläche der Stützflächen 20 beliebig gewählt werden kann, z.B. kreisförmig. Hier ist die Grundfläche ein Rechteck mit abgeflachten Ecken. Auch die Anzahl der Stützelemente 20 ist frei wählbar. Es können auch überhaupt keine Stützelemente 20 vorgesehen werden. Aus Gründen der Stabilität und Steifigkeit empfiehlt es sich jedoch, zumindest ein Stützelement 20 vorzusehen. In diesem Fall empfiehlt es sich ferner aus Gründen einer Gleichverteilung, das bzw. die Stützelemente 20 mittig auf dem Boden 17 anzuordnen. Die drei Stützelemente 20 der Fig. 1 sind symmetrisch angeordnet. Sie könnten aber auch an beliebig anderen Stellen aus dem Boden 17 hervorstehen. Es empfiehlt ferner, dass sie die Schenkel 14, 16 nicht berühren, da der Raum zwischen den Schenkeln 14, 16 und den Vorsprüngen 18, soweit vorhanden, eine Ausnehmung 19 in dem Rahmenteil 10 definieren, die zur Aufnahme einer Auswerferplatte dient, die im Zusammenhang mit den Fig. 2 und 8 noch ausführlicher beschrieben werden wird.

In den kurzen Schenkeln 16 sind weitere, innen liegende Ausnehmungen 22 vorgesehen. Die optionalen Ausnehmungen 22 schließen vorzugsweise an die Ausnehmung 19 an, reichen jedoch nicht zwingend bis zum Boden 17. Es versteht sich, dass die weiteren Ausnehmungen 22 alternativ oder zusätzlich auch in den langen Schenkeln 14 vorgesehen werden könnten. Auch die Anzahl der weiteren Ausnehmungen 22 ist beliebig wählbar.

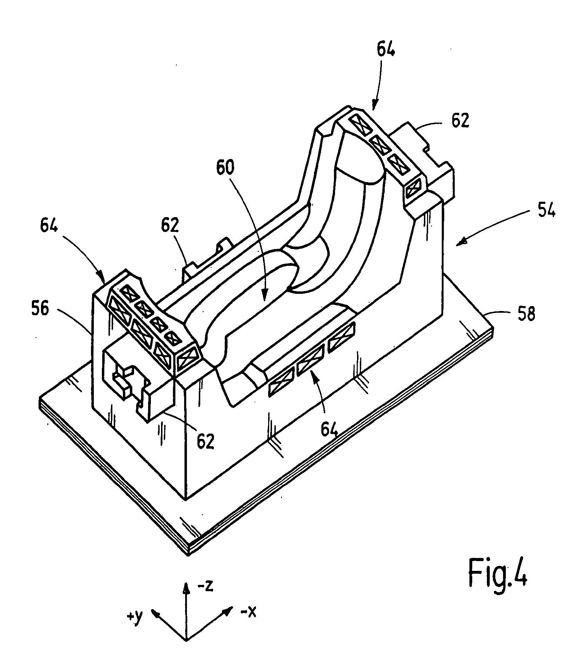

Die Ausnehmung 22 dient zur Aufnahme eines Mantelteils, wie es im Zusammenhang mit Fig. 4 noch ausführlicher beschrieben werden wird. Die Form der weiteren Ausnehmungen 22 ist von solchen Bereichen des Mantelteils abhängig, die in der Betriebsstellung in Eingriff mit den weiteren Ausnehmungen 22 kommen sollen. Die weiteren Ausnehmungen 22 dienen dann zur Fixierung des Mantelteils gegenüber dem Rahmenteil und einem noch zu beschreibenden Kernteil während eines Formvorgangs. Die weiteren Ausnehmungen 22 nehmen das Mantelteil vorzugsweise formschlüssig auf, wobei zwischen den weiteren Ausnehmungen 22 und dem Mantelteil optional auch zusätzliche Verblockungselemente vorgesehen werden können, wie sie später noch ausführlicher beschrieben werden.

Am äußeren Umfang des Rahmens 12 können die Schenkel 14, 16 sogenannten Führungsstollen 24 aufweisen. In der Fig. 1 sind zwei Führungsstolleri 24 dargestellt. In den Außenseiten der kurzen Schenkel 16 ist jeweils ein Führungsstollen 24 vorgesehen. Der Führungsstollen 24 dient zur Fixierung und Ausrichtung (Zentrierung) des Rahmenteils 10 mit dem Kernteil, wie es noch ausführlich beschrieben werden wird. Es versteht sich, dass ein oder mehrere Führungsstollen vorgesehen werden können. Die Führungsstollen 24 können auch außen in den langen Seiten 14 vorgesehen sein. Inverse Führungsstollen, d.h. Führungsnocken, können alternativ vorgesehen werden.

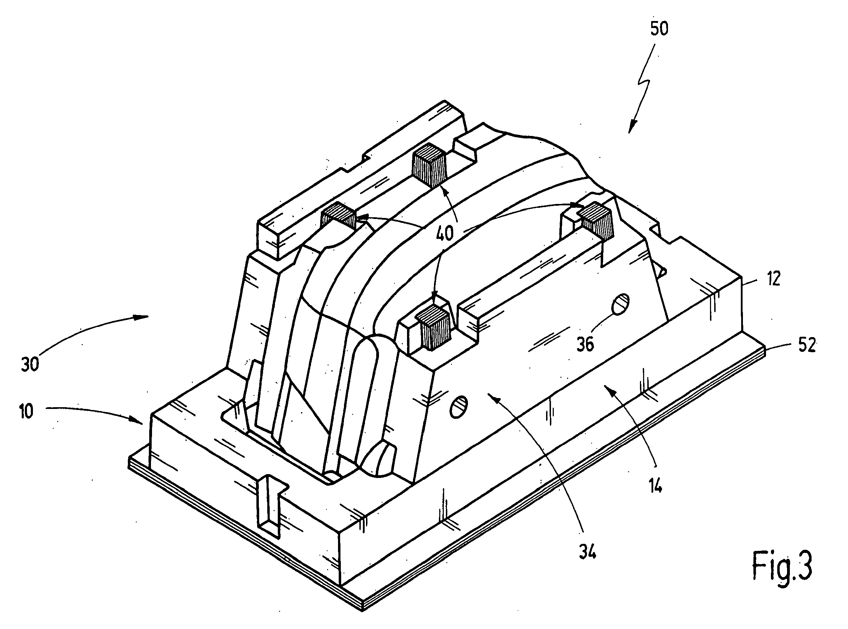

Bezugnehmend auf Fig. 2 ist eine schematische, perspektivische Ansicht einer Austauscheinheit 30 dargestellt. Die Austauscheinheit 30 stellt ebenfalls ein Modul des erfindungsgemäßen Formwerkzeugs dar. Die Austauscheinheit 30 umfasst ein Kernteil (Patrize) 32 und eine Auswerferplatte 46. Die Austauscheinheit 30 wird in das Rahmenteil 10 eingesteckt (vgl. Fig. 3).

Das in Fig. 2 dargestellte Kernteil 32 weist zumindest ein flügelähnliches Stützelement 34 auf. In der Fig. 2 sind zwei Stützelemente 34 gezeigt. Die Stützelemente 34 kommen im eingesteckten Zustand des Kernteils 32 mit den langen Schenkeln 14 des Rahmens 12 in Anlage. Die Stützelemente weisen insbesondere Bohrungen 36 auf, die zum Durchleiten von Leitungen (Hydraulik, Pneumatik, Elektrik, Wasserkühlung, und Ähnlichen) dienen.

Sowohl die geometrische Form der Stützelemente 34 als auch ihre Anordnung relativ zum Kernteil 32 sollte möglichst beibehalten werden, um die Austauscheinheit 30 möglichst einfach und ohne viel Aufwand auswechseln zu können, wenn z.B. ein neues Formteil mit einer anderen Form herzustellen ist. Das gleiche gilt für die Anordnung der Öffnungen 36. Je mehr sich die einzelnen Modulkomponenten ähneln, desto besser lässt sich der Baukastengedanke realisieren.

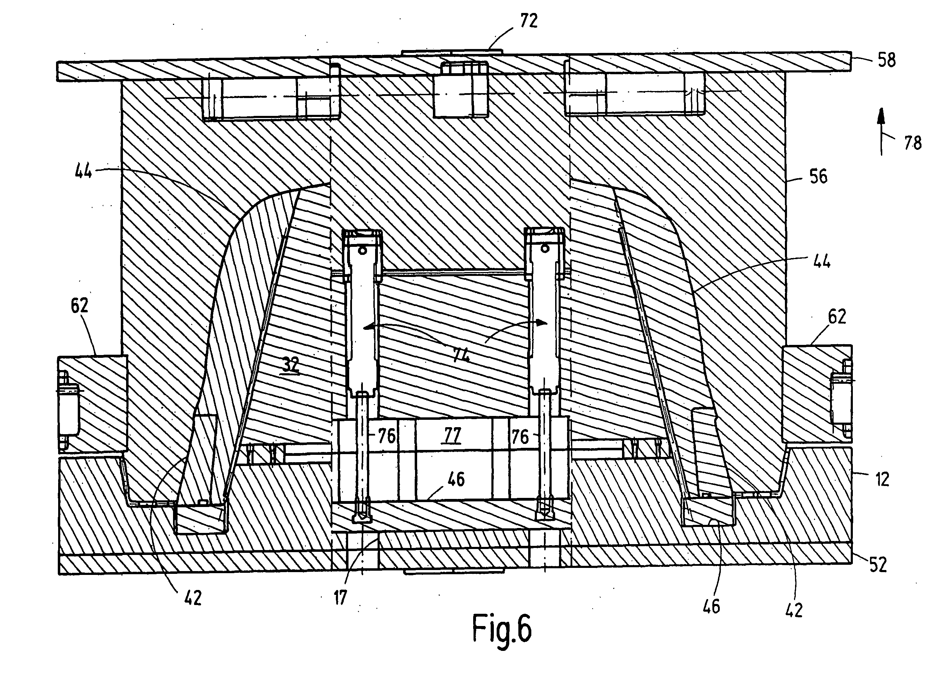

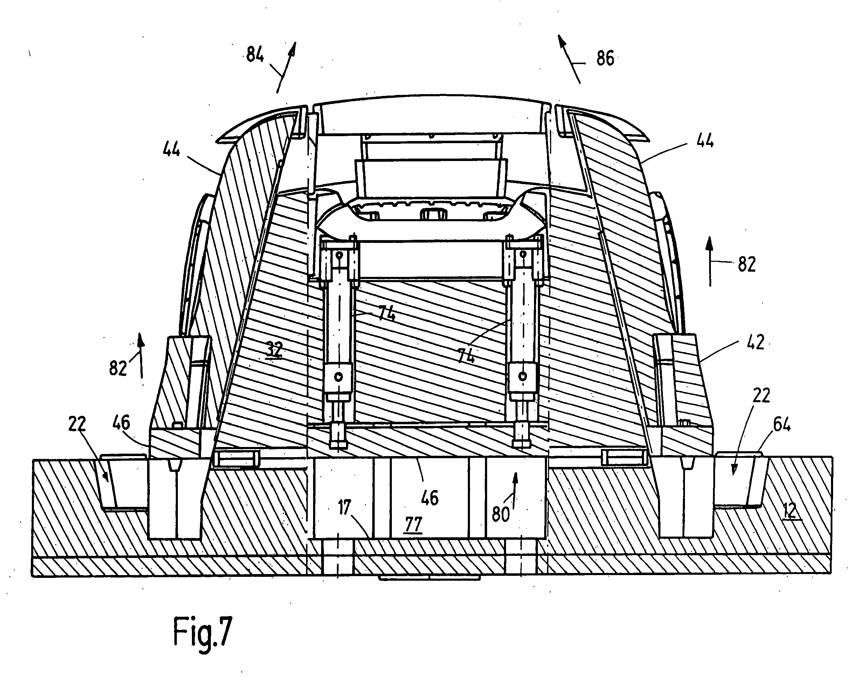

Zwischen den Stützelementen 34 weist das in der Fig. 2 dargestellte Kernteil 32 eine Patrize 38 für z.B. einen Stoßfänger eines Pkws auf. Die Patrize 38 wird insbesondere von Hubeinrichtungen 40 durchdrungen, von denen in Fig. 2 insgesamt vier Stück dargestellt sind, die im Zusammenhang mit Fig. 6 und 7 noch ausführlicher beschrieben werden.

Das Kernteil 32 umfasst ferner sogenannte Schieber 42 und 44 (Innenschieber), die gleitverschieblich gegenüber dem Hauptkörper der Patrize 38 angeordnet sind. Die Anzahl und geometrische Form der Schieber hängt stark vom herzustellenden Formteil ab und kann deshalb variieren. Die Schieber sind hier direkt mit der Auswerferplatte verbunden.

An einer Unterseite des Kernteils 32 ist die Auswerferplatte 46 beweglich angebracht, und zwar durch eine im Wesentlichen unmittelbare Verbindung mit den Hubeinrichtungen, die auch Führungsfunktionen übernehmen können. Die Verbindung "führt" in der Regel aber nicht. Die Auswerferplatte 46 ist in der Fig. 2 in einer ausgefahrenen Stellung dargestellt. Die Auswerferplatte 46 ist im Wesentlichen unmittelbar mit den Hubeinrichtungen 40 verbunden. Im Unterschied zu einem herkömmlichen Kernteil wird die erfindungsgemäße Auswerferplatte 46 aber nicht über eine Adapterplatte an die Hubeinrichtungen 40 gekoppelt. Die Auswerferplatte 46 ist mit den Hubeinrichtungen 40 gemäß der vorliegenden Erfindung unmittelbar, d.h. ohne Adapterplatte, verbunden. Natürlich können zwischen der Auswerferplatte 46 und den Hubeinrichtungen 40 (bzw. deren Kolben im Falle von Hubzylindern) noch Dämpfungselemente bzw. Befestigungselemente vorgesehen sein. Solche Kopplungselemente mit Ausnahme einer Adapterplatte werden als von dem Begriff "im Wesentlichen unmittelbar verbunden" umfasst angesehen.

In Fig. 3 ist die Austauscheinheit 30 der Fig. 2 in die Ausnehmung 19 des Rahmenteils 10 der Fig. 1 eingesteckt worden. Der Rahmen 12 ist hier mit einer Aufspannplatte 52, insbesondere der beweglichen Seite der hier nicht dargestellten Formmaschine, verbunden. Das Formteil 10 und die Aufspannplatte 52 können einstückig ausgebildet sein. Im Stand der Technik erforderliche Distanzleisten zwischen dem Rahmenteil 12 und der Aufspannplatte 52 werden gemäß der vorliegenden Erfindung nicht benötigt. Der Rahmen 12 ist unmittelbar mit der Aufspannplatte 52, insbesondere formschlüssig damit verbunden.

Die Stützelemente 34 liegen auf den langen Schenkeln 14 des Rahmens 12 vorzugsweise eben auf. Das Kernteil 32 ist dann relativ zum Rahmen 12 fixiert und ausgerichtet. Um die Justierung zu vereinfachen, können zusätzliche Zentrierelemente vorgesehen werden. Solche Zentrierelemente sind in den Figuren nicht dargestellt. Die langen Seiten könnten z.B. senkrecht zu ihrer Längsrichtung Erhebungen mit dreieckigem Querschnitt aufweisen, wobei die Flügelelemente 34 entsprechende Aussparungen mit dreieckigem Querschnitt aufweisen, so dass beim Einführen der Austauscheinheit 30 in das Rahmenteil 10 automatisch eine Ausrichtung gemäß Nut und Feder erfolgt. Alternativ und/oder zusätzlich können z.B. auf den Stützelementen 18 entsprechende weitere Erhebungen vorgesehen sein, die sich z.B. in Längsrichtung der langen Seiten 14 erstrecken, wobei in diesem Fall entsprechende Aussparungen in der Unterseite des Kernteils 32 vorzusehen wären.

Ferner kann die Auswerferplatte 46 derart gestaltet sein, dass sie formschlüssig an dem Innenumfang des Rahmenteils 12 in Anlage kommt. Auf diese Weise könnte die Austauscheinheit 10 ebenfalls bezüglich ihrer Lage im Rahmenteil 10 justiert werden, insbesondere wenn sich die Ausnehmung 19 in Richtung des Bodens 17 verjüngt.

In Fig. 4 ist eine schematische perspektivische Ansicht eines Mantelteils bzw. einer Matrize 54 dargestellt.

Die Matrize 54 weist einen Körper 56 auf. Der Körper 56 ist unmittelbar, d.h. ohne ein weiteres Rahmenteil, mit einer anderen Aufspannplatte 58 verbunden. Die Aufspannplatte 58 wird vorzugsweise mit einer Seite der Formmaschine verbunden, die nicht beweglich ist. Alternativ kann auch zwischen der Aufspannplatte und der Matrize eine Zwischenplatte zur Aufnahme des Heißkanals vorgesehen sein.

Die Matrize 54 wurde in der Fig. 4 aus Vereinfachung der Darstellung auf dem Kopf stehend dargestellt. Die Matrize 54 bildet das Gegenstück zur Patrize 38. In einer Betriebsstellung des Formwerkzeugs gemäß der vorliegenden Erfindung bzw. in einer Betriebsstellung der Formmaschine sind das Rahmenteil 12 (Fig. 1), die Austauscheinheit 30 (Fig. 2) und die Matrize 54 zwischen den Aufspannplatten 52 und 58 fest verspannt. Zwischen Matrize 54 und Patrize 38 bildet sich dann ein Hohlraum, der einem herzustellenden Formteil entspricht. Die Kontur in der Matrize 54 ist mit 60 bezeichnet.

Um die verschiedenen Teile miteinander auszurichten, sind an der Matrize 54 unter anderem Aufnahmen 62 für Führungen angebracht.

Optional können an der Matrize 54 ferner Verblockungselemente 64 angeordnet sein. Die Verblockungselemente 64 befinden sich vorzugsweise an solchen Stellen des Matrizenkörpers 56, die in der Betriebsstellung in Kontakt mit dem Kernteil 32 und/oder dem Rahmenteil 10 kommen. Die Verblockungselement dienen der Kraftübertragung zwischen den einzelnen Teilen 10, 30 und 54 während eines Formvorgangs.

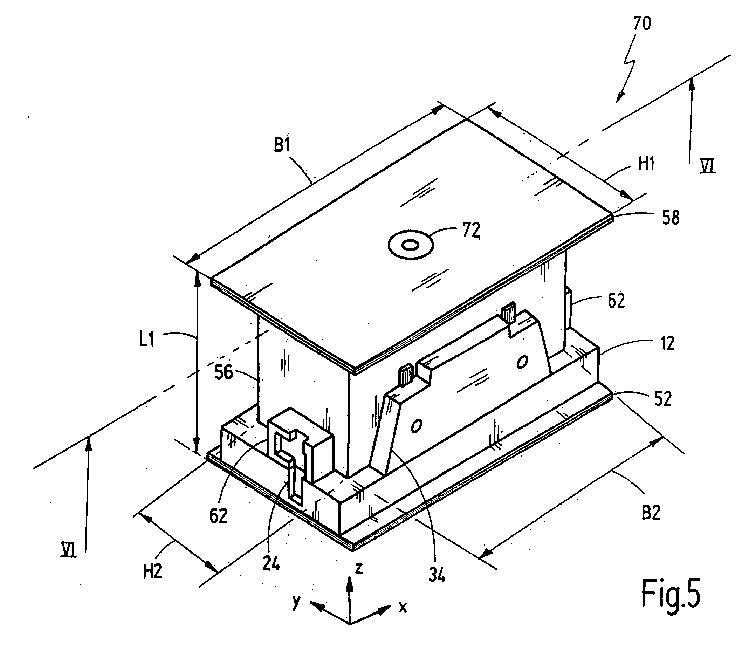

In Fig. 5 ist ein Formwerkzeug 70 gemäß der vorliegenden Erfindung in einer Betriebsstellung dargestellt. Dazu wird das in Fig. 4 dargestellte Mantelteil 54 umgedreht und auf das Kernteil 32 gesteckt.

Die Aufspannplatte 58 weist eine Einführöffnung 72 für Spritzmaterial auf, wenn das Formwerkzeug 70 zum Spritzgießen verwendet werden soll.

Die Aufnahmen 62 sind zu den Führungsstollen 24 ausgerichtet, so dass Führungsnocken dort eingreifen können.

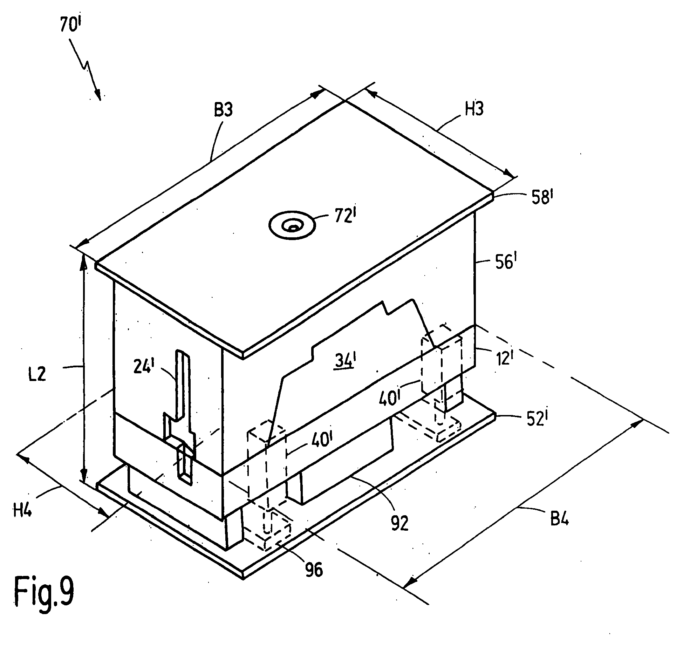

Ferner kann man in Fig. 5 erkennen, dass ein Querschnitt des Matrizenkörpers 56 kleiner als ein Querschnitt einer herkömmlichen Matrize ist (vgl. Fig. 9).

Wenn das Formwerkzeug 70 gemäß der Erfindung in eine Formmaschine (nicht dargestellt) eingespannt ist, entspricht die kurze Seite der Aufspannplatte 58 einer Höhenrichtung. Die Länge der kurzen Seite ist mit H1 bezeichnet. Die lange Seite der Aufspannplatte 58 entspricht der Breite, deren Länge mit B1 bezeichnet ist. Der Abstand zwischen den Aufspannplatten 58 und 52 verläuft in Längsrichtung der Formmaschine. Der Abstand ist mit L1 bezeichnet.

Indem der Querschnitt des Matrizenkörpers 56 gegenüber herkömmlichen Matrizen verkleinert ist, wird gemäß der vorliegenden Erfindung weniger Material benötigt. Dies spart Kosten. Insbesondere weil für den Mantel kein Rahmen erforderlich ist. Des Weiteren wird Gewicht eingespart. Wenn eine Matrize im Stand der Technik 20 Tonnen wiegt, so wiegt sie nach der vorliegenden Erfindung nur noch ca. 13 Tonnen.

Der Unterschied hinsichtlich der Abmessungen wird insbesondere im Vergleich zu der in Fig. 9 dargestellten herkömmlichen Form 70' erkennbar. In Fig. 9 ist ein Formwerkzeug 70' gemäß dem Stand der Technik dargestellt. Der Körper 56' des Mantelteils schließt bündig mit dem Stützelement 34' ab. Das Stützelement 34 gemäß der vorliegenden Erfindung steht gegenüber dem Matrizenkörper 56 vor (vgl. Fig. 5).

In Fig. 6 ist ein vertikaler Schnitt entlang der Linie VI-VI der Fig. 5 durch das Formwerkzeug 70 gemäß der vorliegenden Erfindung gezeigt.

Das Formwerkzeug 70 ist in einer geschlossenen Stellung bzw. in der Betriebsstellung gezeigt. Der Matrizenkörper 54 greift in die Ausnehmungen 22 (vgl. Fig. 1) der kurzen Schenkel 16 des Rahmens 12 ein. Zwischen diesen Elementen sind hier Verblockungselemente 64 vorgesehen. Die Verblockungselemente 64 dienen dazu, den Matrizenkörper 56 insbesondere seitlich fest gegenüber dem Rahmen 12 zu verspannen, so dass die Schenkel der Matrize 54 bei einem Spritzvorgang nicht seitlich nach außen bewegt werden. Bei einem Spritzvorgang wird mit sehr hohen Drücken gearbeitet.

In das Kernteil 32 sind Hubeinrichtungen in Form von Hydraulikzylindern 74 integriert. Die Hydraulikzylinder 74 weisen jeweils einen Kolben 76 auf, der mit der Auswerferplatte 46 fest verbunden ist.

In der Fig. 6 ist die Auswerferplatte 46 ebenfalls in der Betriebsstellung gezeigt.

In Fig. 7 ist eine Auswurfstellung gezeigt.

Die Matrize 54 bzw. deren Körper 56 ist in Richtung eines Pfeils 78 (vgl. Fig. 6) entfernt bzw. geöffnet worden. Ferner wurden die Hydraulikzylinder 74 betätigt, so dass sich die Auswerferplatte 46 in Richtung eines Pfeils 80 durch einen Hohlraum 77 bewegt hat, der durch das Rahmenteil 12 und das Kernteil 32 definiert ist. Üblicherweise erfolgt ein Öffnen der Form synchron zum Betätigen der Auswerferplatte 46.

Die Auswerferplatte 46 reicht seitlich bis zu den Schiebern 42 und 44, die direkt mit der Auswerferplatte 46 verbunden sind. Durch Bewegen der Auswerferplatte 46 in Richtung des Pfeils 80 werden die Schieber 42 ebenfalls in Richtung des Pfeils 80 bewegt. In der Regel werden alle vorhandenen Schieber durch die Betätigung der Auswerferplatte 46 in ihre jeweilige Auswurfstellung bewegt. Relativ zum Körper des Kerns bewegen sich die Schieber 42 in Richtung von Pfeilen 82. Die Auswurfbewegung veranlasst die Schieber 44 sich in Richtung der Pfeile 84 bzw. 86 entlang ihrer Kontaktflächen zu dem Kernteil 32 zu bewegen. Auf diese Weise wird das hergestellte Formteil aus der Form gelöst bzw. ausgeworfen. Das Formteil selbst ist in der Fig. 7 nicht dargestellt. Die Schieber 44 können aber auch mit Führungsstangen (nicht dargestellt) bewegt werden, die mit der Auswerferplatte 46 verbunden sind und durch den Körper des Kernteils 32 hindurchragen.

Je nachdem, wie groß der gewünschte Hub der Auswerferplatte 46 ist, wird der Hohlraum 77 durch weiteres Aushöhlen des Kernteils 32 zusätzlich vertieft. In Fig. 7 ist gut zu erkennen, dass die Auswerferplatte 46 in der Auswurfstellung in das Kernteil 32 bzw. in eine solche zusätzliche Ausnehmung hineinragt.

Es versteht sich, dass anstatt von Hydraulikzylindern 74 auch andere Hubeinrichtungen 40 verwendet werden könnten. Der Einbau der Hubeinrichtung in das Kernteil 32 selbst ist jedoch von großem Vorteil, da sich bei einem Austausch der Austauscheinheit 30 ein Verbinden der Hubeinrichtungen mit der Auswerferplatte 46 erübrigt. Dies beschleunigt den Austauschvorgang ungemein. Die Tatsache, dass Bohrungen im Kernteil 32 für die Aufnahme der Hubeinrichtung vorgesehen werden müssen, verringert die Steifigkeit und Stabilität des Kernteils 32 nur unwesentlich bzw. gar nicht.

In Fig. 8 ist eine Unterseite des Kernteils 32 der Fig. 2 zum besseren Verständnis perspektivisch dargestellt.

In der Fig. 8 blickt man auf die Unterseite der Fig. 2.

Es ist deutlich zu erkennen, dass die Auswerferplatte 46 Öffnungen 90 aufweist, die vorzugsweise deckungsgleich zu den Anschlagsflächen 20 der Stützelemente 18 angeordnet sind. Die Anschlagsflächen 20 finden ihr deckungsgleiches Gegenstück in Anschlagsflächen 92 im Kernteil 32.

In Fig. 9 ist ein Formwerkzeug 70' gemäß dem Stand der Technik dargestellt, um nochmals die Unterschiede besser darstellen zu können. Ähnliche Merkmale sind mit gleichen Bezugsziffern versehen, die jedoch einen zusätzlichen Strich aufweisen.

Die Aufspannplatte 58' weist die Abmessung H3 x B3 auf, die insbesondere identisch zu H1 x B1 ist. Typische Größen für H3 und B3 sind z.B. 1600 mm bzw. 2700 mm.

Ein wesentlicher Unterschied ist jedoch in den Größen L1 und L2 zu verzeichnen. Während L1 z.B. 1570 mm beträgt, würde L2 (Stand der Technik) 1990 mm betragen. Dies liegt unter anderem daran, dass zwischen der Aufspannplatte 52' und den Rahmen 12' im Stand der Technik zusätzliche Distanzleisten 92 vorgesehen sind.

Die Distanzleisten 92 werden benötigt, damit die in Fig. 9 nicht dargestellte Auswerferplatte 46' durch den Rahmen 12' hindurchgesteckt werden kann. Deshalb weist der Rahmen 12' auch keinen Boden auf. Zwischen den Distanzleisten 42 ist eine weitere Adapterplatte 96 vorgesehen. Die Adapterplatte 96 ist mit Hubeinrichtungen 40' verbunden, die außenumfänglich am Rahmen 12' angeordnet sind.

Um im Stand der Technik die Auswerferplatte 46' zu betätigen, muss die Auswerferplatte 46' mit der Adapterplatte 96 verbunden sein. Die mit dem Verbinden verbundene Arbeit ist insbesondere bei einer modularen Ausgestaltung des Formwerkzeugs hinderlich.

Ein weiterer Nachteil ist darin zu sehen, dass der Rahmen 12' ohne Boden nicht verwindungssteif ist, was bei den mitunter enormen Drücken, die bei Spritzgussvorgängen auftreten, nicht unerheblich ist. All diese Nachteile, und weitere, werden mit der vorliegenden Erfindung beseitigt.

Ferner ist eine Querschnittsfläche (H2 x B2) des Mantels 56 der Fig. 5 bedeutend kleiner als die entsprechende Querschnittfläche (H4 x B4) der konventionellen Form der Fig. 9.

Mit der vorliegenden Erfindung wird ein neues modulares Formwerkzeug vorgeschlagen, dass gegenüber dem herkömmlichen modularen Formwerkzeug mit Rahmen deutliche Vorteile zeigt.

## Patentansprüche

1. Modular aufgebaute Vorrichtung (70) zum Herstellen eines Formteils mit: einem Kernteil (32), einem Rahmenteil (12) und einem Mantelteil (54), die vorzugsweise zwischen zwei Aufspannplatten (52, 58) verspannbar sind, wobei in einer Betriebsstellung einer Formmaschine das Kernteil (32) und das Mantelteil (54) zwischen sich einen Hohlraum für das herzustellende Formteil definieren und das Kernteil (32) und das Rahmenteil (10) miteinander verbunden sind, wobei das Rahmenteil (10) mit einem Boden (17) verbundene Schenkel (14, 16) umfasst, die zusammen eine Ausnehmung (19) in dem Rahmenteil (10) umschließen, wobei das Kernteil (32) eine Auswerferplatte (46) umfasst, die beweglich mit dem Kernteil (32) verbunden ist und die gemeinsam eine Austauscheinheit (30) bilden, die derart ausgebildet ist, dass die Auswerferplatte (46) in der Betriebsstellung in die Ausnehmung (19) eingreift und mittels zumindest einer im Wesentlichen unmittelbar verbundenen Hubeinrichtung (40; 74) in eine Auswurfstellung bewegbar ist, wobei die Hubeinrichtung (40; 74) in die Austauscheinheit (30), insbesondere in das Kernteil (32) integriert ist.

2. Vorrichtung nach Anspruch 1, wobei die Auswerferplatte (46) in der Betriebsstellung an dem Boden (17) des Rahmenteils (10) anliegt.

3. Vorrichtung nach einem der Ansprüche 1 oder 2, wobei die Schenkel (14, 16) den Boden (17) vollständig umschließen, so dass die Auswerferplatte (46) den Rahmen (12) nicht durchgreift.

4. Vorrichtung nach einem der Ansprüche 1 bis 3, wobei die Schenkel (14, 16) den Boden (17) derart umschließen, dass die Ausnehmung (19), wenn das Rahmenteil (10) mit dem Kernteil (32) verbunden ist, im Wesentlichen nur in Richtung des Kernteils (32) offen ist.

5. Vorrichtung nach einem der Ansprüche 1 bis 4, wobei der Boden (17) im Bereich der Ausnehmung (19) mindestens ein Stützelement (18) aufweist, das im Wesentlichen senkrecht aus dem Boden (17) hervorsteht, und wobei die Auswerferplatte (46) entsprechende Öffnungen (92) zur Aufnahme der Stützelemente (18) aufweist.

6. Vorrichtung nach einem der Ansprüche 1 bis 5, wobei das Kernteil (32) auf seiner dem Rahmenteil zugewandten Seite ebenfalls eine Ausnehmung aufweist, die deckungsgleich zur Ausnehmung (19) des Rahmenteils (10) ist.

7. Vorrichtung nach einem der Ansprüche 1 bis 6, wobei zumindest einer der Schenkel (14, 16) eine Zentriereinheit aufweist, um mit entsprechenden Aussparungen im Kernteil (32, 34) zusammenzuwirken.

8. Vorrichtung nach einem der Ansprüche 1 bis 7, wobei das Kernteil (32) zumindest einen Schieber (42, 44) umfasst, der bei Bewegung der Auswerferplatte (46) in Richtung (80) des Kernteils (32) in eine Auswurfstellung verfahrbar ist.

9. Vorrichtung nach einem der vorhergehenden Ansprüche, wobei die Hubeinrichtung (40) ein hydraulisch, pneumatisch oder elektrisch betätigter Zylinder (74) ist.

10. Vorrichtung nach einem der Ansprüche 1 bis 9, wobei das Rahmenteil (10) direkt, insbesondere flächig, mit einer maschinenbeweglichen Aufspannplatten (52) verbunden ist.

11. Vorrichtung nach Anspruch 10, wobei das Mantelteil (54) im Wesentlichen direkt mit einer maschinenfesten Aufspannplatte (58) verbunden ist.

12. Vorrichtung nach einem der Ansprüche 1 bis 11, wobei das Mantelteil (52) mit einer, vorzugsweise im Wesentlichen umlaufenden, Verblockung (64) versehen ist, um im Betriebszustand das Mantelteil (54) gegenüber dem Kernteil (32) in seiner Lage zu sichern.

## Claims

1. A module-designed apparatus (70) for manufacturing a molded part comprising: a core member (32), a frame member (12) and a jacket member (54), which can be fixed between two fixing plates (52, 58), wherein the core member (32) and the jacket member (54) define a cavity for the molded part, which is to be manufactured, in an operation position of a molding machine and wherein the core member (32) and the frame member (10) are connected to each other, wherein the frame member (10) comprises legs (14, 16) being connected to a base (17) surrounding together a recess (19) in the frame member (10), wherein the core member (32) comprises an ejection plate (46) being connected to the core member (32) movably and defining commonly an exchange unit (30) which is formed such that in the upper rating position the ejection plate (46) engages the recess (19) and can be moved into an ejection position by means of a lifting device (40, 74) being connected thereto substantially direct, wherein the lifting device (40, 74) is integrated into the exchange unit (30), particularly into the core member (32).

2. The apparatus of claim 1, wherein the ejection plate (46) abuts on the base (17) of the frame member (10) in the operation position.

3. The apparatus of claim 1 or 2, wherein the legs (14, 16) surround the base (17) completely such that the ejection plate (46) does not pass the frame (12).

4. The apparatus of any of claims 1 to 3, wherein the legs (14, 16) surround the base (17) such that the recess (19) is substantially open only towards the core member (32), the frame member (10) is connected to the core member (32).

5. The apparatus of any of claims 1 to 4, wherein the base (17) comprises at least one support element (18) in a region of the recess (19), the support element projecting from the base (17) substantially in a perpendicular manner, and wherein the ejection plate (46) comprises corresponding openings (92) for receiving the support elements (18).

6. The apparatus of any of claims 1 to 5, wherein the core member (32) also comprises a recess at a side facing the frame member, the recess being congruent to the recess (19) of the frame member (10).

7. The apparatus of any of claims 1 to 6, wherein at least one of the legs (14, 16) comprises a centering unit for cooperating with corresponding notches in the core member (32, 34).

8. The apparatus of any of claims 1 to 7, wherein the core member (32) at least comprises a pusher (42, 44) which can be moved into an ejection position during movement of the ejection plate (46) towards the core member (32).

9. The apparatus of one of the preceding claims, wherein the lifting device (40) is a cylinder (74) being operated hydraulically, pneumatically or electrically.

10. The apparatus of any of the claims 1 to 9, wherein the frame member (10) is connected directly, in particular flat, to one of the fixing plates (52) which can be moved mechanically.

11. The apparatus of claim 10, wherein the jacket member (54) substantially is connected directly to the fixing plate (58), which is static relative to the apparatus.

12. The apparatus of one of the claims 1 to 11, wherein the jacket member (52) is provided with a, preferably circumferential, locking device (64) for position-fixing the jacket member (54) to the core member (32) in the operation condition.

## Revendications

1. Dispositif à structure modulaire (70) servant à fabriquer une pièce moulée comprenant : une partie centrale (32), une partie cadre (12) et une partie revêtement (54) pouvant être serrées de préférence entre deux plaques de serrage (52, 58), la partie centrale (32) et la partie revêtement (54), dans une position de fonctionnement d'une machine à mouler, définissant entre elles une cavité pour la pièce moulée à fabriquer et la partie centrale (32) et la partie cadre (10) étant reliées ensemble, la partie cadre (10) comprenant des branches (14, 16) reliées à un fond (17) et entourant conjointement un évidement (19) dans la partie cadre (10), la partie centrale (32) comportant une plaque d'éjection (46) reliée mobile à la partie centrale (32), lesquelles formant conjointement une unité interchangeable (30) conçue de telle sorte que la plaque d'éjection (46) dans la position de fonctionnement s'insère dans l'évidement (19) et peut être déplacée dans une position d'éjection au moyen d'au moins un dispositif de levage (40 ; 74) relié sensiblement directement, le dispositif de levage (40 ; 74) étant intégré dans l'unité interchangeable (30), en particulier dans la partie centrale (32).

2. Dispositif selon la revendication 1, la plaque d'éjection (46) reposant dans la position de fonctionnement contre le fond (17) de la partie cadre (10).

3. Dispositif selon l'une quelconque des revendications 1 ou 2, les branches (14, 16) entourant entièrement le fond (17), de sorte que la plaque d'éjection (46) ne traverse pas le fond (12).

4. Dispositif selon l'une quelconque des revendications 1 à 3, les branches (14, 16) entourant le fond (17) de telle sorte que l'évidement (19), lorsque la partie cadre (10) est reliée à la partie centrale (32), n'est sensiblement ouvert qu'en direction de la partie centrale (32).

5. Dispositif selon l'une quelconque des revendications 1 à 4, le fond (17) comprenant dans la zone de l'évidement (19) au moins un élément d'appui (18) faisant saillie sensiblement verticalement du fond (17), et la plaque d'éjection (46) comprenant des ouvertures (92) correspondantes servant à recevoir les éléments d'appui (18).

6. Dispositif selon l'une quelconque des revendications 1 à 5, la partie centrale (32) comprenant également sur sa face tournée vers la partie cadre un évidement coïncidant avec l'évidement (19) de la partie cadre (10).

7. Dispositif selon l'une quelconque des revendications 1 à 6, au moins l'une des branches (14, 16) comprenant une unité de centrage afin de coopérer avec des évidements correspondants dans la partie centrale (32, 34).

8. Dispositif selon l'une quelconque des revendications 1 à 7, la partie centrale (32) comprenant au moins un coulisseau (42, 44) mobile en direction (80) de la partie centrale (32) dans une position d'éjection lors du déplacement de la plaque d'éjection (46).

9. Dispositif selon l'une quelconque des revendications précédentes, le dispositif de levage (40) étant un cylindre (74) actionné de façon hydraulique, pneumatique ou électrique.

10. Dispositif selon l'une quelconque des revendications 1 à 9, la partie cadre (10) étant reliée directement, en particulier à plat, à une plaque de serrage (52) mobile par rapport à la machine.

11. Dispositif selon la revendication 10, la partie revêtement (54) étant reliée sensiblement directement à une plaque de serrage (58) fixée sur la machine.

12. Dispositif selon l'une quelconque des revendications 1 à 11, la partie revêtement (52) étant pourvue d'un blocage (64) de préférence sensiblement circulaire afin, dans l'état de fonctionnement, de bloquer dans sa position la partie revêtement (54) par rapport à la partie centrale (32).
